# EUROPÄISCHE PATENTANMELDUNG

(11) **EP 4 385 823 A1**
(43) Veröffentlichungstag der Anmeldung: **19.06.2024**
(21) Anmeldenummer: 23198565.6
(22) Anmeldetag: 20.09.2023
(51) Int. Cl.: B60R 3/00, B60R 3/02

(54) **TRITTSTUFEN-HALTEVORRICHTUNG FÜR EINE TRITTSTUFE FÜR FAHRZEUGE, INSBESONDERE ELEKTRO-FAHRZEUGE ZUR PERSONENBEFÖRDERUNG, SOWIE FAHRZEUG**

(30) Priorität: 15.12.2022 DE 202022107029 U
(71) Anmelder: Bruns Holding GmbH & Co. KG, 26689 Apen (DE)
(72) Erfinder: Bruns, Gerit, 26160 Bad Zwischenahn (DE)
(74) Vertreter: Eisenführ Speiser

(57) **Zusammenfassung**

Die Erfindung betrifft eine Trittstufen-Haltevorrichtung für eine Trittstufe für Fahrzeuge, insbesondere Elektro-Fahrzeuge zur Personenbeförderung, mit einer an einer Fahrzeugstruktur des Fahrzeuges befestigbaren Trittstufe, mit mindestens einer Lagereinrichtung zum Befestigen der Trittstufe an der Fahrzeugstruktur, wobei die Lagereinrichtung so ausgebildet ist, dass die Trittstufe in einem Crashfall relativ zur Fahrzeugstruktur bewegbar und/oder teilweise oder vollständig von der Fahrzeugstruktur, mit Bewegungs-Führungs-Mitteln zum Beeinflussen einer Bewegungsbahn der Trittstufe relativ zur Fahrzeugstruktur in einem Crashfall, ablösbar ist.

Die Lagereinrichtung weist mindestens eine vordere Halterung, die in einem äußeren Bereich des Fahrzeugs an der Fahrzeugstruktur positioniert ist, und mindestens eine hintere Halterung auf, die in einem inneren Bereich des Fahrzeugs an der Fahrzeugstruktur positioniert ist.

## Beschreibung

Die Erfindung betrifft eine Trittstufen-Haltevorrichtung für eine Trittstufe für Fahrzeuge, insbesondere Elektro-Fahrzeuge zur Personenbeförderung nach dem Oberbegriff des Anspruchs 1.

Die Erfindung betrifft ferner ein Fahrzeug, insbesondere Elektro-Fahrzeug zur Personenbeförderung.

Trittstufen finden bei Fahrzeugen weit verbreitete Anwendung, um den Ein- und Ausstieg, insbesondere für mobilitätsbeschränkte Personen, zu erleichtern. Hierbei sind die Trittstufen üblicherweise im unteren Bereich der Fahrzeugkarosserie befestigt.

Fahrzeuge mit einem Elektromotor weisen oftmals ebenfalls Energiespeicher in Form von elektrischen Batterien oder Tanks für einen flüssigen oder gasförmigen Brennstoff wie Wasserstoff im unteren Bereich der Fahrzeugkarosserie auf.

Im Falle eines Crashs, insbesondere bei einem seitlichen Crash, besteht folglich die Gefahr, dass bei einem Fahrzeug mit einer Trittstufe diese in Richtung des Energiespeichers beschleunigt wird und diesen unter Umständen beschädigen kann. Es ist daher notwendig, konstruktive Schutzmaßnahmen zu ergreifen, die eine Beschädigung des Energiespeichers eines Fahrzeugs durch die Trittstufe im Crashfall möglichst verhindert.

Aufgabe der vorliegenden Erfindung ist es, eine Trittstufen-Haltervorrichtung und ein Fahrzeug mit einer entsprechenden Trittstufen-Haltevorrichtung bereitzustellen, die einen erhöhten Schutz des Energiespeichers des Fahrzeugs ermöglichen.

Die Erfindung löst die Aufgabe in einem ersten Aspekt mit den Merkmalen des Anspruchs 1 dadurch, dass die Lagereinrichtung mindestens eine vordere Halterung aufweist, die in einem äußeren Bereich des Fahrzeugs an der Fahrzeugstruktur positioniert ist, und die Lagereinrichtung mindestens eine hintere Halterung aufweist, die in einem inneren Bereich des Fahrzeugs an der Fahrzeugstruktur positioniert ist. Demnach erfolgt die Befestigung der Trittstufe an zwei Positionen. Die Befestigung an zwei Positionen birgt den Vorteil, dass bei einem vollständigen Lösen an einer der Positionen im Crashfall die Trittstufe durch die zweite Halterung nach wie vor gehalten werden kann. Hierdurch kann eine unkontrollierte, vollständig losgelöste Bewegung der Trittstufe vermieden werden.

Gemäß einer Weiterbildung der Erfindung ist diese gekennzeichnet durch Umlenkmittel zum Umlenken der Bewegung der Trittstufe im Crashfall entlang einer Bewegungsbahn. Durch die Umlenkmittel wird somit erreicht, dass die Trittstufe nicht unkontrolliert auf die Fahrzeugstruktur trifft und/oder den Energiespeicher des Fahrzeugs beschädigt.

Nach einer weiteren bevorzugten Ausführungsform weist die hintere Halterung Führungsmittel auf zum Umlenken der Trittstufe. Hierdurch wird erreicht, die Trittstufe wie vorstehend bereits allgemein beschrieben gezielt so umzulenken, dass diese im Crashfall nicht auf den Energiespeicher des Fahrzeugs trifft und diesen somit nicht beschädigt.

Nach einer weiteren bevorzugten Weiterbildung der Erfindung sind die Führungsmittel der hinteren Halterung Führungsflächen oder weisen Führungsflächen auf, die schräg gegenüber einer Horizontalen so angeordnet sind, dass die Trittstufe in einem Crashfall nach unten und innen relativ zur Fahrzeugstruktur abgeleitet und umgelenkt wird. Hierbei wird die Trittstufe an dem Energiespeicher des Fahrzeugs vorbei gelenkt.

Gemäß einer Weiterbildung der Erfindung sind die Führungsflächen in einem Winkelbereich zwischen etwa 85° und 15° gegenüber einer Horizontalen, besonders bevorzugt in einem Winkelbereich zwischen 30° und 60° gegenüber einer Horizontalen geneigt angeordnet.

Nach einer weiteren bevorzugten Ausführungsform der Erfindung weist die Lagereinrichtung, vorzugsweise die mindestens eine vordere Halterung, eine Sollbruchstelle oder eine Sollbiegestelle auf, derart, dass in einem Crashfall die Trittstufe von außen nach innen und bezogen auf die Fahrzeugstruktur bewegbar ist, wobei vorzugsweise die Sollbruchstelle oder Sollbiegestelle so ausgebildet ist, dass sich die Trittstufe teilweise oder vollständig von der Fahrzeugstruktur lösen kann. Durch das teilweise oder vollständige Lösen kann sich die Trittstufe im Crashfall entlang der (geführten) Bahn bewegen. Weist eine der Halterungen eine Sollbiegestelle auf, entsteht der Vorteil, dass die Trittstufe einerseits gezielt in Abhängigkeit von der Festigkeit und Energieabsorptionsfähigkeit der Sollbiegestelle in eine andere Position bewegbar ist und gleichzeitig die Trittstufe aber weiterhin gehalten wird und sich nicht unkontrolliert fortbewegt und möglicherweise Personen gefährdet.

Gemäß einer Weiterbildung der Erfindung ist die Sollbruchstelle oder Sollbiegestelle ausgebildet als Bauteil mit einer definierbaren Festigkeit, vorzugsweise als Stab oder Blech oder Bolzen oder Schraube, dessen Festigkeit so eingestellt ist, dass bei bestimmten Beschleunigungskräften im Crashfall die Trittstufe sich aus ihrer Position lösen kann.

Nach einer weiteren Ausführungsform der Erfindung ist die Sollbruchstelle oder Sollbiegestelle so ausgebildet, dass die Trittstufe nach der Bewegung aus der ursprünglichen Position heraus weiter von der vorderen Halterung mindestens teilweise gehalten wird. Hierdurch kann eine weitere Stabilisierung bzw. genauere Führung der Trittstufe erreicht werden.

Gemäß einer weiteren bevorzugten Ausführungsform der Erfindung weist die hintere Halterung einen Vorsprung auf, sodass eine Tragfläche für die Trittstufe oder ein mit der Trittstufe verbundenes Befestigungselement ausbildet ist. Aus dieser Grundposition der hinteren Halterung heraus kann im Crashfall die geführte Bewegung erfolgen.

Nach einer weiteren bevorzugten Ausführungsform bildet der Vorsprung an der hinteren Halterung eine zur Innenseite des Fahrzeugs offene Bucht, vorzugsweise ein Langloch aus, und sind im Anschluss an die oder benachbart zu der Bucht bzw. dem Langloch die Führungsflächen der Führungsmittel an der Halterung ausgebildet, um die Trittstufe nach innen und unten umzulenken im Crashfall.

Nach einer Weiterbildung der Erfindung weist die hintere Halterung einen im Wesentlichen sich vertikal von der Fahrzeugstruktur nach unten erstreckenden ersten Abschnitt und einen sich schräg nach innen erstreckenden zweiten Abschnitt auf, an welchem mindestens eine Führungsfläche zum Umlenken ausgebildet ist.

Gemäß einer weiteren bevorzugten Ausführungsform weist mindestens die vordere und/oder die hintere Halterung ein Koppelglied auf, vorzugsweise eine Koppelstange, welches einerseits schwenkbar an der Fahrzeugstruktur und andererseits schwenkbar an der Trittstufe angelenkt ist und die Trittstufe in einem Crashfall entlang einer Bewegungsbahn mindestens auch mit einer Bewegungskomponente nach unten in Richtung Boden umlenkt und dabei die Trittstufe trägt.

Gemäß einer Weiterbildung der Erfindung ist das Koppelglied an der hinteren Halterung ausgebildet.

Nach einer weiteren bevorzugten Ausführungsform weist die vordere Halterung ein mindestens teilweise plastisch verformbares Halteglied auf, welches im Crashfall mindestens plastisch verformt und im Crashfall die Trittstufe auch entlang der Bewegungsbahn führt und die Trittstufe weiterhin trägt.

Die Erfindung löst die Aufgabe gemäß Anspruch 15 in einem zweiten Aspekt mit einem Fahrzeug insbesondere Elektro-Fahrzeug zur Personenbeförderung, mit einer Fahrzeugstruktur, einem Antrieb für das Fahrzeug, insbesondere einem Elektromotor, einem Energiespeicher für den Antrieb des Fahrzeugs, insbesondere eine elektrische Batterie oder ein Tank für einen flüssigen oder gasförmigen Brennstoff wie Wasserstoff oder dergleichen und einer an der Fahrzeugstruktur des Fahrzeuges befestigbaren Trittstufe, einer Trittstufen-Haltevorrichtung für die Trittstufe, mindestens einer Lagereinrichtung zum Befestigen der Trittstufe an der Fahrzeugstruktur, dadurch, dass die Lagereinrichtung so ausgebildet ist, dass die Trittstufe in einem Crashfall relativ zur Fahrzeugstruktur bewegbar und/oder teilweise oder vollständig von der Fahrzeugstruktur ablösbar ist, und dass die Haltevorrichtung Bewegungs-Führungs-Mittel aufweist zum Beeinflussen der Bewegungsbahn der Trittstufe relativ zur Fahrzeugstruktur in einem Crashfall.

Gemäß einer Weiterbildung der Erfindung sind die Bewegungs-Führungs-Mittel so ausgebildet, dass die Trittstufe in einem Crashfall an dem Energiespeicher vorbei geleitet wird, insbesondere entlang einer Bewegungsbahn geleitet wird, die wenigstens teilweise unterhalb des Energiespeichers verläuft.

Nach einer weiteren bevorzugten Ausführungsform ist die Trittstufen-Haltevorrichtung nach mindestens einem der vorstehenden Ansprüche ausgebildet.

Die Erfindung ist nachstehend anhand bevorzugter Ausführungsbeispiele näher erläutert.

Hierbei zeigen:
- Fig.1: eine seitliche Ansicht eines Fahrzeugs mit einer Trittstufe und einer erfindungsgemäßen Trittstufen-Haltevorrichtung
- Fig.2: ein erstes Ausführungsbeispiel der erfindungsgemäßen TrittstufenHaltevorrichtung in der Grundposition (vor einem Crashfall) in einer vorderen Teilschnittansicht des Fahrzeugs
- Fig.3: das in Fig.2 gezeigte Ausführungsbeispiel während/nach einem Crashfall in einer vorderen Teilschnittansicht des Fahrzeugs
- Fig.4: ein zweites Ausführungsbeispiel der erfindungsgemäßen TrittstufenHaltevorrichtung in der Grundposition (vor einem Crashfall) in einer vorderen Teilschnittansicht des Fahrzeugs
- Fig.5: das in Fig.4 gezeigte Ausführungsbeispiel während/nach einem Crashfall in einer vorderen Teilschnittansicht des Fahrzeugs
- Fig.6: ein drittes Ausführungsbeispiel der erfindungsgemäßen TrittstufenHaltevorrichtung in der Grundposition (vor einem Crashfall) in einer vorderen Teilschnittansicht des Fahrzeugs
- Fig.7: das in Fig.6 gezeigte Ausführungsbeispiel während/nach einem Crashfall in einer vorderen Teilschnittansicht des Fahrzeugs

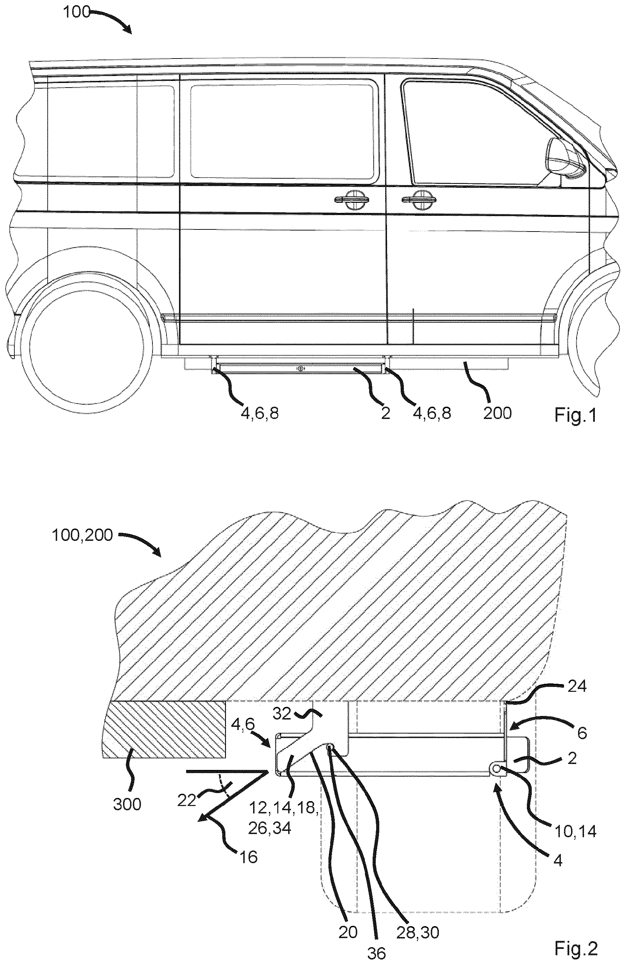

Fig.1 zeigt ein Fahrzeug 100 mit einer Fahrzeugstruktur 200 mit Chassis, einer Trittstufe 2, einer Trittstufen-Haltevorrichtung 4 mit einer Lagereinrichtung 6 zum Befestigen der Trittstufe 2 an der Fahrzeugstruktur 200 und Bewegungs-Führungs-Mitteln 8 zum Beeinflussen einer Bewegungsbahn 16 der Trittstufe 2 relativ zur Fahrzeugstruktur 200 in einem Crashfall.

In Fig.2 ist ein erstes Ausführungsbeispiel der erfindungsgemäßen Trittstufen-Haltevorrichtung 4 mit einer Lagereinrichtung 6 in der Grundposition (vor einem Crashfall) in einer vorderen Teilschnittansicht des Fahrzeugs 100 dargestellt. In der Figur ist zudem ein Teil eines Energiespeichers 300, bevorzugt eine elektrische Batterie, des Fahrzeugs 100 dargestellt. Die Haltevorrichtung 4 weist eine vordere Halterung 10 auf, die in einem äußeren Bereich des Fahrzeugs 100 an der Fahrzeugstruktur 200 positioniert ist. Die Lagereinrichtung 6 weist zudem eine hintere Halterung 12 auf, die in einem inneren Bereich des Fahrzeugs 100 an der Fahrzeugstruktur 200 positioniert ist. Weiterhin weist die Haltevorrichtung 4 Umlenkmittel 14 zum Umlenken der Bewegung der Trittstufe 2 im Crashfall entlang der Bewegungsbahn 16 auf. Zudem weist die hintere Halterung 12 Führungsmittel 18 auf zum Umlenken der Trittstufe 2.

Bei der hier gezeigten Ausführungsform weisen die Führungsmittel 18 der hinteren Halterung 12 Führungsflächen 20 auf, die schräg gegenüber einer Horizontalen so angeordnet sind, dass die Trittstufe in einem Crashfall nach unten und innen relativ zur Fahrzeugstruktur abgeleitet und umgelenkt wird. Dabei sind die Führungsflächen in einem Winkelbereich 22 zwischen 30° und 60° gegenüber einer Horizontalen geneigt angeordnet.

Weiterhin weist die vordere Halterung 10 eine Sollbiegestelle 24 auf, derart, dass in einem Crashfall die Trittstufe 2 von außen nach innen bezogen auf die Fahrzeugstruktur 200 bewegbar ist, wobei die Sollbiegestelle 24 so ausgebildet ist, dass sich die Trittstufe 2 teilweise oder vollständig von der Fahrzeugstruktur 200 lösen kann.

Dabei ist die Sollbiegestelle 24 als Stab ausgebildet, dessen Festigkeit so eingestellt ist, dass bei bestimmten Beschleunigungskräften im Crashfall die Trittstufe 2 sich aus ihrer Position lösen kann. Zudem ist die Sollbiegestelle 24 so ausgebildet, dass die Trittstufe 2 nach der Bewegung aus der ursprünglichen Position heraus weiter von der vorderen Halterung 10 mindestens teilweise gehalten werden kann. Der Stab (mit Sollbiegestelle 24) ist vorzugsweise aus Metall ausgebildet. Er kann beispielsweise einen kreisförmigen Querschnitt aufweisen oder einen rechteckigen Querschnitt und nach Art eines Blechs oder einer Platte ausgebildet sein. Die Sollbiegestelle 24 kann in einem Bereich des Stabs oder Blechs oder Platte, beispielsweise im oberen Bereich, der mit der Fahrzeugstruktur 200 verbunden ist, also insbesondere einem Fahrwerk eines Fahrzeugs, ausgebildet sein. Alternativ kann aber auch der Stab 24 oder Blech oder Platte an einer anderen Stelle eine Schwächung aufweisen und dort biegen. Gleiches gilt auch für die Ausbildung als Blech.

Die hintere Halterung 12 weist einen Vorsprung 26 auf, sodass eine Tragfläche 28 für die Trittstufe 2 ausbildet ist. Der Vorsprung 26 bildet an der hinteren Halterung 12 eine zur Innenseite des Fahrzeugs offene Bucht 30, und im Anschluss an die Bucht 30 sind die Führungsflächen 20 der Führungsmittel 18 an der Halterung 12 ausgebildet, um die Trittstufe 2 nach innen und unten umzulenken im Crashfall. Weiterhin weist die hintere Halterung 12 einen im Wesentlichen sich vertikal von der Fahrzeugstruktur 200 nach unten erstreckenden ersten Abschnitt 32 und einen sich schräg nach innen erstreckenden zweiten Abschnitt 34 auf, an dem eine Führungsfläche 20 zum Umlenken ausgebildet ist. Über den Zylinder 36, der mit der Trittstufe 2 verbunden ist, liegt die Trittstufe 2 in der Bucht 30 auf der Tragfläche 28 auf.

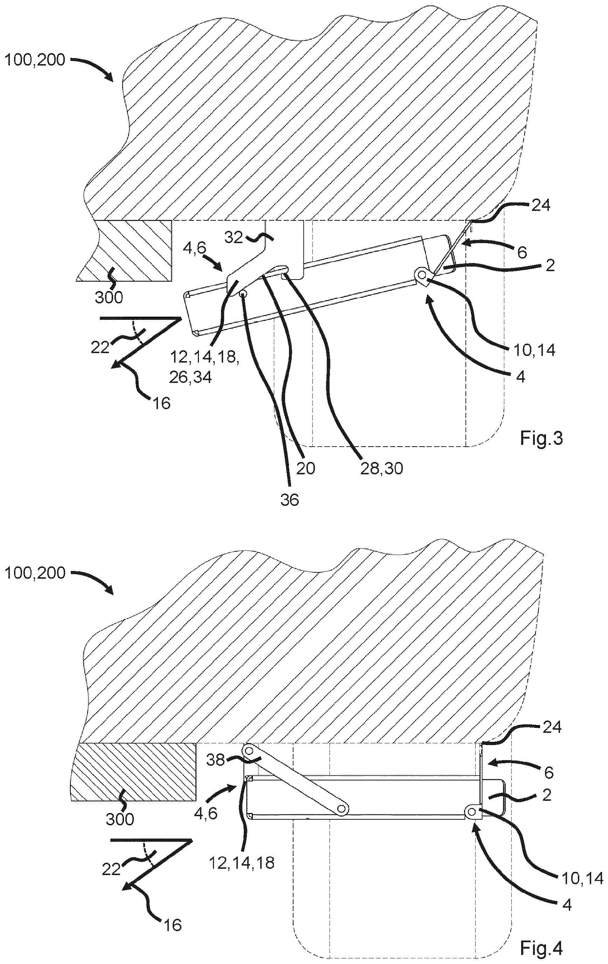

Fig.3 zeigt die in Fig.2 gezeigte Ausführungsform während/nach einem Crashfall. Die Trittstufe 2 wird/wurde entlang der Bewegungsbahn 16 bewegt. Der Zylinder 36 liegt aufgrund der Verschiebung der Trittstufe nicht mehr auf der Tragfläche 28 auf, sondern befindet sich in Kontakt mit der Führungsfläche 20. Der Stab 6 und somit die Trittstufe 2 haben sich an der Sollbiegestelle 24 teilweise gelöst; dabei wird die Trittstufe 2 nach der Bewegung aus der ursprünglichen Position heraus weiter von der vorderen Halterung 10 teilweise gehalten. Die Bewegungsbahn 16 weist hierbei einen Winkel zu einer Horizontalen auf, derart, dass die Trittstufe 2 an dem Energiespeicher 300 vorbei bewegt wird/wurde.

In Fig.4 ist eine Haltevorrichtung 4 gemäß einem Ausführungsbeispiel gezeigt, die dadurch gekennzeichnet ist, dass die hintere Halterung 12 ein Koppelglied 38 in Form einer Koppelstange aufweist, welche einerseits schwenkbar an der Fahrzeugstruktur 200 und andererseits schwenkbar an der Trittstufe 2 angelenkt ist und die Trittstufe 2 in einem Crashfall entlang einer Bewegungsbahn 16 auch mit einer Bewegungskomponente nach unten in Richtung Boden umlenkt und dabei die Trittstufe 2 trägt. Hier ist ebenfalls die Sollbiegestelle 24 als Bauteil mit einer definierbaren Festigkeit in Form eines Stabs ausgebildet, dessen Festigkeit so eingestellt ist, dass bei bestimmten Beschleunigungskräften im Crashfall die Trittstufe 2 sich aus ihrer Position lösen kann. Weiterhin ist auch hier die Sollbiegestelle 24 so ausgebildet, dass die Trittstufe 2 nach der Bewegung aus der ursprünglichen Position heraus weiter von der vorderen Halterung 10 mindestens teilweise gehalten werden kann. Somit ist die Haltevorrichtung 4 dadurch gekennzeichnet, dass die vordere Halterung ein teilweise plastisch verformbares Halteglied aufweist, welches im Crashfall mindestens plastisch verformt und im Crashfall die Trittstufe auch entlang der Bewegungsbahn führt und die Trittstufe weiterhin trägt.

Im Gegensatz zu dem Ausführungsbeispiel in Fig.2 und 3 ist der Vorsprung 26 des hier gezeigten Ausführungsbeispiels derart ausgebildet, dass dieser drehbar an einem ersten Abschnitt 32 der hinteren Halterung 12 gelagert ist. Hierbei bildet der Vorsprung 26 eine zur Außenseite des Fahrzeugs offene Bucht 30 mit einer Tragfläche 28, auf der die Trittstufe 2 aufliegt.

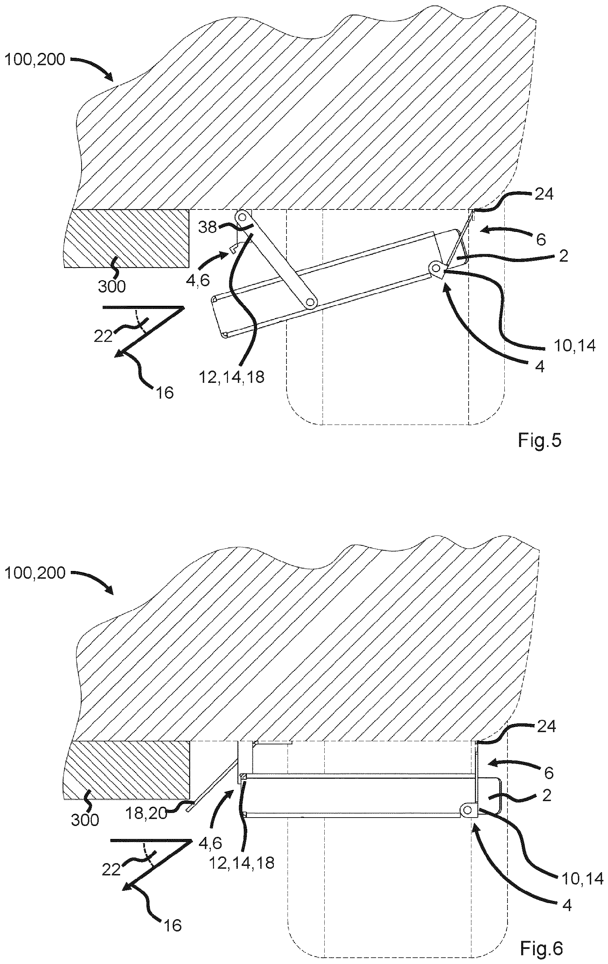

Fig.5 zeigt die in Fig.4 gezeigte Ausführungsform während/nach einem Crashfall. Der Vorsprung 26 mit der Tragfläche 28 wurde durch den Crashfall nach innen gedreht, sodass der Vorsprung 26 außer Eingriff der Trittstufe 2 ist. Letztere klappt daher nach unten und wird durch das Koppelglied 38 gehalten. Die Bewegungsbahn der Trittstufe wird dabei durch das Koppelglied 38 wie bei Fig.4 beschrieben beeinflusst. Der Stab 6 und somit die Trittstufe 2 haben sich an der Sollbiegestelle 24 teilweise gelöst; dabei wird die Trittstufe 2 nach der Bewegung aus der ursprünglichen Position heraus weiter von der vorderen Halterung 10 teilweise gehalten. Die Bewegungsbahn 16 weist hierbei einen Winkel zu einer Horizontalen auf, derart, dass die Trittstufe 2 an dem Energiespeicher 300 vorbei bewegt wird/wurde.

Fig.6 zeigt ein Ausführungsbeispiel, bei dem im Vergleich zu dem in Fig.4 und 5 gezeigten Ausführungsbeispiel statt des Koppelglieds 38 eine Führungsfläche 20 vorhanden ist, die schräg gegenüber einer Horizontalen so angeordnet ist, derart, dass die Trittstufe 2 in einem Crashfall nach unten und innen relativ zur Fahrzeugstruktur 200 abgeleitet und umgelenkt wird. Wie beim vorherigen Ausführungsbeispiel ist der Vorsprung 26 hier derart ausgebildet, dass dieser drehbar an einem ersten Abschnitt 32 der hinteren Halterung 12 gelagert ist. Hierbei bildet der Vorsprung 26 eine zur Außenseite des Fahrzeugs offene Bucht 30 mit einer Tragfläche 28, auf der die Trittstufe 2 aufliegt.

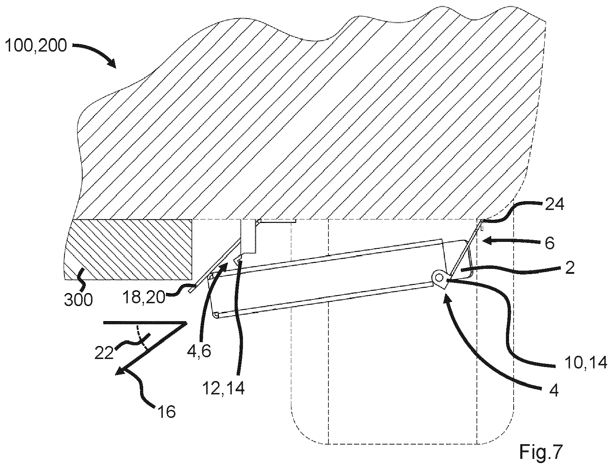

Fig.7 zeigt die Umlenkung der Trittstufe 2 beim Ausführungsbeispiel aus Fig.6 im Crashfall. Hier ist ebenfalls der Vorsprung 26 mit der Tragfläche 28 nach innen gedreht, sodass der Vorsprung 26 außer Eingriff der Trittstufe 2 ist. Die Trittstufe 2 ist in Kontakt mit der Führungsfläche 20 und wird durch diese abgelenkt.

### Bezugszeichenliste

- 100: Fahrzeug
- 200: Fahrzeugstruktur
- 300: Energiespeicher
- 2: Trittstufe
- 4: Trittstufen-Haltevorrichtung
- 6: Lagereinrichtung
- 8: Bewegungs-Führungs-Mittel
- 10: Vordere Halterung
- 12: Hintere Halterung
- 14: Umlenkmittel
- 16: Bewegungsbahn
- 18: Führungsmittel
- 20: Führungsfläche
- 22: Winkelbereich
- 24: Sollbiegestelle
- 26: Vorsprung
- 28: Tragfläche
- 30: Bucht
- 32: Erster Abschnitt (der hinteren Halterung)
- 34: Zweiter Abschnitt (der hinteren Halterung)
- 36: Zylinder
- 38: Koppelglied

## Patentansprüche

1. Trittstufen-Haltevorrichtung (4) für eine Trittstufe für Fahrzeuge (100), insbesondere Elektro-Fahrzeuge zur Personenbeförderung,
mit einer an einer Fahrzeugstruktur (200) des Fahrzeuges (100) befestigbaren Trittstufe (2),
mit mindestens einer Lagereinrichtung (6) zum Befestigen der Trittstufe (2) an der Fahrzeugstruktur (200),wobei die Lagereinrichtung (6) so ausgebildet ist, dass die Trittstufe (2) in einem Crashfall relativ zur Fahrzeugstruktur (200) bewegbar und/oder teilweise oder vollständig von der Fahrzeugstruktur (200) ablösbar ist, mit Bewegungs-Führungs-Mitteln (8) zum Beeinflussen einer Bewegungsbahn (16) der Trittstufe (2) relativ zur Fahrzeugstruktur (200) in einem Crashfall,
**dadurch gekennzeichnet, dass**
die Lagereinrichtung (6) mindestens eine vordere Halterung (10) aufweist, die in einem äußeren Bereich des Fahrzeugs (100) an der Fahrzeugstruktur (200) positioniert ist, und die Lagereinrichtung (6) mindestens eine hintere Halterung (12) aufweist, die in einem inneren Bereich des Fahrzeugs (100) an der Fahrzeugstruktur (200) positioniert ist.

2. Haltevorrichtung nach Anspruch 1,
**gekennzeichnet durch** Umlenkmittel (14) zum Umlenken der Bewegung der Trittstufe (2) im Crashfall entlang einer Bewegungsbahn (16).

3. Haltevorrichtung nach mindestens einem der Ansprüche 1 und/oder 2,
**dadurch gekennzeichnet, dass** die hintere Halterung (12) Führungsmittel (18) aufweist zum Umlenken der Trittstufe (2).

4. Haltevorrichtung nach Anspruch 3,
**dadurch gekennzeichnet, dass** die Führungsmittel (18) der hinteren Halterung (12) Führungsflächen (20) sind oder Führungsflächen (20) aufweisen, die schräg gegenüber einer Horizontalen so angeordnet sind, dass die Trittstufe (2) in einem Crashfall nach unten und innen relativ zur Fahrzeugstruktur (200) abgeleitet und umgelenkt wird.

5. Haltevorrichtung nach Anspruch 4,
**dadurch gekennzeichnet, dass** die Führungsflächen (20) in einem Winkelbereich (22) zwischen etwa 85° und 15° gegenüber einer Horizontalen, besonders bevorzugt in einem Winkelbereich (22) zwischen 30° und 60° gegenüber einer Horizontalen geneigt angeordnet sind.

6. Haltevorrichtung nach mindestens einem der vorstehenden Ansprüche,
**dadurch gekennzeichnet, dass** die Lagereinrichtung (6), vorzugsweise die mindestens eine vordere Halterung (10), eine Sollbruchstelle oder eine Sollbiegestelle (24) aufweist, derart, dass in einem Crashfall die Trittstufe (2) von außen nach innen bezogen auf die Fahrzeugstruktur (200) bewegbar ist,
wobei vorzugsweise die Sollbruchstelle oder Sollbiegestelle (24) so ausgebildet ist, dass sich die Trittstufe (2) teilweise oder vollständig von der Fahrzeugstruktur (200) lösen kann.

7. Haltevorrichtung nach Anspruch 6,
**dadurch gekennzeichnet, dass** die Sollbruchstelle oder Sollbiegestelle (24) ausgebildet ist als Bauteil mit einer definierbaren Festigkeit, vorzugsweise als Stab oder Blech oder Bolzen oder Schraube, dessen Festigkeit so eingestellt ist, dass bei bestimmten Beschleunigungskräften im Crashfall die Trittstufe (2) sich aus ihrer Position lösen kann.

8. Haltevorrichtung nach Anspruch 7,
**dadurch gekennzeichnet, dass** die Sollbruchstelle oder Sollbiegestelle (24) so ausgebildet ist, dass die Trittstufe (2) nach der Bewegung aus der ursprünglichen Position heraus weiter von der vorderen Halterung (10) mindestens teilweise gehalten wird.

9. Haltevorrichtung nach mindestens einem der vorstehenden Ansprüche 2-8, **dadurch gekennzeichnet, dass** die hintere Halterung (12) einen Vorsprung (26) aufweist, sodass eine Tragfläche (28) für die Trittstufe (2) oder ein mit der Trittstufe (2) verbundenes Befestigungselement ausbildet ist.

10. Haltevorrichtung nach mindestens einem der vorstehenden Ansprüche 2-9, **dadurch gekennzeichnet, dass** der Vorsprung (26) an der hinteren Halterung (12) eine zur Innenseite des Fahrzeugs (100) offene Bucht (30), vorzugsweise ein Langloch ausbildet, und dass im Anschluss an die oder benachbart zu der Bucht (30) bzw. das Langloch die Führungsflächen (20) der Führungsmittel (18) an der Halterung (12) ausgebildet sind, um die Trittstufe nach innen und unten umzulenken im Crashfall.

11. Haltevorrichtung nach mindestens einem der vorstehenden Ansprüche,
**dadurch gekennzeichnet, dass** die hintere Halterung (12) einen im Wesentlichen sich vertikal von der Fahrzeugstruktur (200) nach unten erstreckenden ersten Abschnitt (32) und einen sich schräg nach innen erstreckenden zweiten Abschnitt (34) aufweist, an welchem mindestens eine Führungsfläche (20) zum Umlenken ausgebildet ist.

12. Haltevorrichtung nach mindestens einem der vorstehenden Ansprüche,
**dadurch gekennzeichnet, dass** mindestens die vordere (10) und/oder die hintere Halterung (12) ein Koppelglied (38) aufweist, vorzugsweise eine Koppelstange, welches einerseits schwenkbar an der Fahrzeugstruktur (200) und andererseits schwenkbar an der Trittstufe (2) angelenkt ist und die Trittstufe (2) in einem Crashfall entlang einer Bewegungsbahn (16) mindestens auch mit einer Bewegungskomponente nach unten in Richtung Boden umlenkt und dabei die Trittstufe (2) trägt.

13. Haltevorrichtung nach Anspruch 12
**dadurch gekennzeichnet, dass** das Koppelglied (38) an der hinteren Halterung (12) ausgebildet ist.

14. Haltevorrichtung nach mindestens einem der vorstehenden Ansprüche
**dadurch gekennzeichnet, dass** die vordere Halterung (10) ein mindestens teilweise plastisch verformbares Halteglied aufweist, welches im Crashfall mindestens plastisch verformt und im Crashfall die Trittstufe (2) auch entlang der Bewegungsbahn (16) führt und die Trittstufe (2) weiterhin trägt.

15. Fahrzeug (100) insbesondere Elektro-Fahrzeug zur Personenbeförderung, mit einer Fahrzeugstruktur (200), einem Antrieb für das Fahrzeug, insbesondere einem Elektromotor, einem Energiespeicher (200) für den Antrieb des Fahrzeugs (100), insbesondere eine elektrische Batterie oder ein Tank für einen flüssigen oder gasförmigen Brennstoff wie Wasserstoff oder dergleichen und einer an der Fahrzeugstruktur (200) des Fahrzeuges (100) befestigbaren Trittstufe (2), einer Trittstufen-Haltevorrichtung (4) für die Trittstufe (2),
mindestens einer Lagereinrichtung (6) zum Befestigen der Trittstufe (2) an der Fahrzeugstruktur (200),
**dadurch gekennzeichnet, dass** die Lagereinrichtung (6) so ausgebildet ist, dass die Trittstufe (2) in einem Crashfall relativ zur Fahrzeugstruktur (200) bewegbar und/oder teilweise oder vollständig von der Fahrzeugstruktur (200) ablösbar ist, und dass die Haltevorrichtung (4) Bewegungs-Führungs-Mittel (8) aufweist zum Beeinflussen der Bewegungsbahn (16) der Trittstufe (2) relativ zur Fahrzeugstruktur (200) in einem Crashfall.

16. Fahrzeug nach Anspruch 15
**dadurch gekennzeichnet, dass** die Bewegungs-Führungs-Mittel (8) so ausgebildet sind, dass die Trittstufe (2) in einem Crashfall an dem Energiespeicher (300) vorbei geleitet wird, insbesondere entlang einer Bewegungsbahn (16) geleitet wird, die wenigstens teilweise unterhalb des Energiespeichers (300) verläuft.

17. Fahrzeug nach Anspruch 15 und oder 16 **dadurch gekennzeichnet, dass** die Trittstufen-Haltevorrichtung (4) nach mindestens einem der vorstehenden Ansprüche ausgebildet ist.
